(19) Europäisches Patentamt / European Patent Office / Office européen des brevets

(11) **EP 4 372 593 A1**

(12) **EUROPEAN PATENT APPLICATION**
published in accordance with Art. 153(4) EPC

(43) Date of publication:
**22.05.2024 Bulletin 2024/21**

(21) Application number: **21950040.2**

(22) Date of filing: **16.07.2021**

(51) International Patent Classification (IPC):
**G06F 21/62** (2013.01)    **G06N 3/02** (2006.01)

(52) Cooperative Patent Classification (CPC):
**G06F 21/62; G06N 3/02**

(86) International application number:
**PCT/ES2021/070529**

(87) International publication number:
**WO 2023/285707 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Telefonica Digital España, S.L.U.**
**28013 Madrid (ES)**

(72) Inventors:
• **MARÍA, García Gutierrez**
**28013 MADRID (ES)**
• **VIVIANA, Aristizabal**
**28013 MADRID (ES)**
• **FRACISCO, Moltalvo**
**28013 MADRID (ES)**

(74) Representative: **Herrero & Asociados, S.L.**
**Edificio Aqua - Agustín de Foxá, 4-10**
**28036 Madrid (ES)**

(54) **METHOD AND SYSTEM FOR ANONYMIZSING DATA**

(57) **SUMMARY**

A method and system for data anonymization comprising:
- a configuration module (11) to read input data (101) and establish continuous and hierarchical variables for information transformation, utility variables and configuration variables to export anonymized output data (102);
- a processing module (12) to obtain (25) the anonymized data by applying (121) an anonymization algorithm (24) and statistics to reduce singularities detected by an autoencoder neural network and obtain causes of the singularity (23) by means of the SHAP method;
- a risk analysis module (13) to calculate client identification risk (26) and utility after anonymizing, by calculating a utility loss in a range between zero and one and the risk also in a range between zero and one, where the loss value and risk value determine whether the output data is publishable.

**FIG. 1**

**Description**

**OBJECT OF THE INVENTION**

The present invention has its application in the telecommunications sector, within the field of digital information security and digital content processing, specifically, in the industry dedicated to database systems, data processing and data anonymization. More particularly, the present invention relates to a system and method for protecting information using anonymization techniques.

**BACKGROUND OF THE INVENTION**

The process or concept of anonymization (or data dissociation) consists of eliminating or minimizing the remaining risk of re-identification of anonymized data, that is, it is a technique by which the possibilities of identifying the owner of the data are eliminated. data, maintaining the veracity and accuracy of the results of their processing, that is, in addition to avoiding the identification of the people to whom said data belong, it must be guaranteed that any operation on the anonymized data does not entail a deviation in the results that would have been obtained with the real data before being subjected to the anonymization process.

To detect unique clients, the use of artificial intelligence tools is proposed, specifically a deep learning (DL) model that uses an autoencoder type neural network such as option to detect anomalies in a data set. The autoencoder network is a type of artificial neural network used to learn efficient data encodings without supervision.

Recently, deep learning (DL) algorithms have been used for a wide variety of problems, including anomaly detection. The DL anomaly detection algorithms used by autoencoders flag outliers in a data set, saving experts the laborious task of sifting through normal cases to find anomalies, as described for example in "Explaining Anomalies Detected by Autoencoders Using SHAP" by L. Antwarg et al., 2020. The DL algorithm using an autoencoder network is an unsupervised algorithm that represents normal data in lower dimensionality and then reconstructs the data in the original dimensionality; thus, normal instances are reconstructed correctly, and outliers are not, clarifying anomalies. Reconstruction errors measure how well the decoder is working and how similar the original output and input are. Model training consists of reducing this reconstruction error, both for continuous and categorical variables.

The total reconstruction error is obtained from a combination of categorical and continuous errors, each calculated from the specific loss functions to predict continuous and categorical variables. However, a static combination of errors is not robust enough, there are algorithms that offer techniques for calculating adaptive weights. In this case, the weight is given for each of the variables used in the autoencoder algorithm and is dynamic for each iteration of the autoencoder, as explained in "SoftAdapt: Techniques for Adaptive Loss Weighting of Neural Networks with Multi-Part Loss Functions" by A. Heydari et al., 2020.

Although anomaly detection algorithms can be effective in identifying those anomalies that could not otherwise be found, some experts in the area consider that they do not facilitate the process of validating results since their output is difficult to explain. This deficiency can make it difficult to convince experts to trust and adopt potentially beneficial systems for anomaly detection. Above all, considering that the output of said algorithms may contain anomalous instances unknown to the expert.

However, recently, a game theory-based framework known as SHapley Additive ExPlanations (SHAP) has been shown to be effective in explaining various supervised learning models, as described in the mentioned reference in "Explaining Anomalies Detected by Autoencoders Using SHAP" by L. Antwarg et al., 2020. In that research, SHAP is used to explain anomalies detected by an autoencoder, i.e., an unsupervised model. The proposed method extracts and visually describes both the features that contributed most to the anomaly and those that compensated for it. A preliminary experimental study using real-world data demonstrates the usefulness of the proposed method in helping experts understand the anomaly and filtering out uninteresting anomalies, with the goal of minimizing the false positive rate of detected anomalies. SHAP assigns each feature an importance value for a particular prediction using components that include: (1) the identification of a new class of feature importance measures, and (2) theoretical results showing that a unique solution exists in this class with a set of desirable properties. The new class unifies six existing methods. Based on insights from this unification, SHAP presents new methods that show improved computational performance and/or better consistency with human intuition over other approaches. The SHAP method explains the variables with the highest reconstruction errors using Shapley Values.

Knowledge of the influential characteristics or variables allows, in the matter at hand, a selective and intelligent anonymization, through methods, such as, for example, raising the level of a variable, data shuffling that randomly mixes data from a data set within an attribute or the application of intelligent noise on continuous variables.

On the other hand, to increase the expert's confidence in the autoencoder algorithm for anomaly detection, an explanation of why an instance is anomalous is useful and extremely relevant, since people do not usually ask why an event happened, but why one event happened instead of another.

The loss of utility or information that occurs when anonymizing a record differentiates between continuous and categorical data, since this loss of utility is quantified differently depending on the type of data. For example, in "Probabilistic Loss Information Measures in Confidentiality Protection of Continuous Microdata" (by JM Mateo-Sanz et al., Data Mining and Knowledge Discovery, 2005) describes a method that allows the calculation of utility per variable or per record. In the case of per variable, the suggested method, unlike the majority, determines a loss of utility in percentage, with values between 0 and 100. With the value 0 not suffering any loss of information and the value 100 suffering a loss of complete information. This method considers five different metrics, calculated before and after anonymizing, which are, for example: mean variation, variance, covariance, Pearson correlation and quartiles. This probabilistic method guarantees that each of these metrics is included in the interval [0, 1] and represents in a friendly way how the data set of continuous variables is varying before and after anonymizing.

The objective technical problem that arises is to allow integrating into the same method for the anonymization of information both the detection of possible singularities produced in the anonymization and the explanation of the causes of such singularities in a friendly way.

## DESCRIPTION OF THE INVENTION

The present invention serves to solve the problem mentioned above, through an anonymization method that uses artificial intelligence, specifically tools provided by deep learning. More specifically, the invention is based on an autoencoder type network architecture to detect unique records.

The present invention allows the anomalies found in an output of the autoencoder network to be explained using a data model interpretation method based on SHAP values and combining both categorical and continuous variables in the same metric. This is beneficial for experts who require justification and visualization of the causes of an anomaly detected by the autoencoder network. Understanding the variables influencing singularity allows for selective and intelligent anonymization of continuous and categorical variables through methods that involve leveling up a hierarchical variable, randomly shuffling data, or applying intelligent noise, while maintaining distribution of data. Furthermore, the invention makes it possible to quantify risks and losses of utility of the information associated with the anonymization process.

One aspect of the invention relates to a method of anonymizing information or data comprising the following steps:

- In a configuration module: Receive or perform an automatic reading of a set of input data, in accordance with what is established by a user, in the configuration module, the input data being property of a client to be anonymized. The anonymization method considers information transformation variables (distinguishing between continuous, categorical and hierarchical variables) and a utility measurement variable reported by the user in said configuration module. Configuration variables proposed by the user through the configuration module are also considered for the export of a set of output data, with the data already anonymized.

- In a processing module: obtain the anonymized data from said output data set by applying an anonymization algorithm and obtain statistical variables to reduce singularities detected in the anonymization, where the anonymization algorithm performs an anonymization of both the categorical variables and the continuous variables, and where obtaining the statistical variables to reduce singularities comprises that the processing module detects the singularities through an autoencoder neural network and obtains causes of the singularity through the well-known SHAP (SHapley Additive ExPlanations) method .

- In a risk analysis module: calculate a customer/client identification risk metric and a utility variable of the information after anonymizing, where the risk analysis module calculates a utility loss value by comparing the utility variable of the input information and the utility variable of the output information, the utility loss value being in a range between zero and one, and where the risk analysis module calculates the risk metric with a risk value in a range between zero and one, where the utility loss value and the risk value determine whether the output data set is suitable for export (i.e., exportable or publishable).

The different functionalities or functions indicated in the previous method are performed by electronic devices (for example, a server or a client node) or set of electronic devices, which in turn may be co-located or distributed in different locations and communications by any type of wired or wireless communication network. The component (hardware or software) of an electronic device that performs a certain functionality is what is known as a module. The different functionalities or functions indicated in the previous method can be implemented as one or more components. Each functionality may be implemented on a different device (or set of devices) or the same device (or set of devices) may implement several or all of the indicated features; That is, the same device (for example, a server) can have several modules, each of them performing one of the functionalities, or these modules can be distributed on different devices. These components and associated functionality can be used by client, server, distributed computing systems, or a peer-to-peer network. These components may be written in a computer language corresponding to one or more programming languages such as functional, declarative, procedural, object-oriented languages and the like. They can be linked to other components through various application programming interfaces and implemented in a server application or a client application. Alternatively, components can be implemented in both client and client applications.

Another further aspect of the present invention relates to an information anonymization system comprising a configuration module, a processing module and a risk analysis module that perform the steps of the data anonymization method described above.

Another last aspect of the invention relates to a computer program, which contains instructions or computer code (stored in a non-transitory computer-readable medium) to cause processing means (of a computer processor) to perform the steps of the method of data anonymization described above.

The advantages of the present invention compared to the state of the prior art and in relation to existing systems are fundamentally:

- The present invention brings together categorical and continuous variables in a single view of singularity metrics.

- The present invention integrates singularity detection, explanation of the causes and obfuscation methods in the same solution. These stages are usually viewed independently, and can be applied or omitted depending on the criteria of the developer and the person responsible for the business.

- Knowledge of the causes of the singularity provided by the invention allows anonymization to be carried out at a surgical level. Touching only those variables that really have an influence on the singularity and therefore favoring the utility of the information after being anonymized.

- The present invention measures the utility of the information and the risk of re-identification of the individuals holding the information in a unique way using comparable and combined 0 to 1 scales.

- The present invention allows for parameterization of data models based on business requirements, so that anonymization meets the maximum permitted utility and re-identification risk criteria.

These and other advantages emerge from the detailed description of the invention that follows.

**BRIEF DESCRIPTION OF THE FIGURES**

Next, a series of drawings that help to better understand the invention and that are expressly related to an embodiment of said invention that is presented as a nonlimiting example of it are briefly described.

FIGURE 1.- Shows a block diagram of a system for the anonymization of information, according to a preferred embodiment of the invention.

FIGURE 2.- Shows a flow diagram of the information anonymization process, according to a preferred embodiment of the invention.

FIGURE 3.- Shows an example of the architecture of the autoencoder neural network used to detect singularities, according to a possible embodiment of the invention.

FIGURE 4.- Shows a graph of the total reconstruction error calculated by the autoencoder network as a function of the distribution of the clients.

FIGURE 5.- Shows SHAP values for clients with a first degree singularity level.

FIGURE 6.- Shows SHAP values for clients with second degree singularity level.

FIGURE 7.- Shows SHAP values for clients with a singularity level of zero degree.

FIGURE 8.- Shows a flow chart of the algorithm to order the variables that most contribute to the error of each client.

## PREFERRED EMBODIMENT OF THE INVENTION

A preferred embodiment of the invention refers to a system that uses information anonymization techniques to allow data processing in compliance with the legal framework established by data protection regulations, particularly: the e-privacy directive and the General Data Protection Regulation (GDPR). This implementation is designed to provide protected information, meeting both the needs from a legal point of view and the expectations of usability of information required by those interested in data processing, specifically its utility.

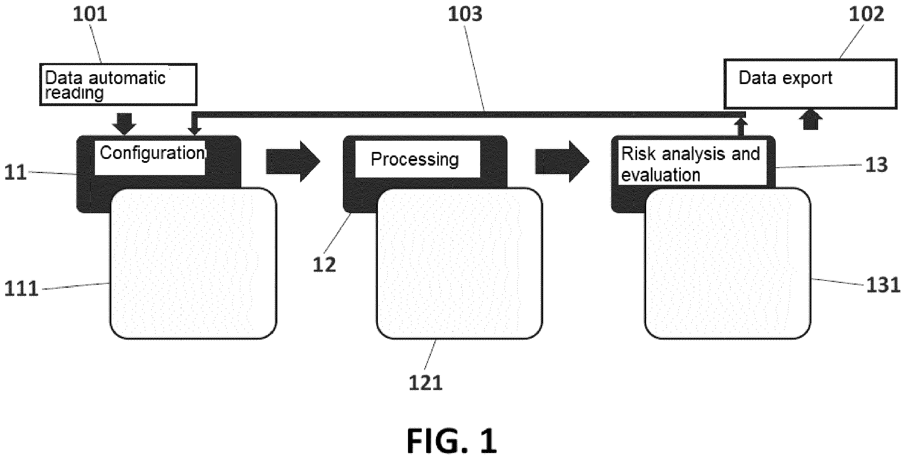

Figure 1 schematically shows the general components of the proposed system for data anonymization:

- Configuration Module (11): The objective of this component is to provide flexibility to define sensitive parameters in terms of usability of the protected data. It allows selecting relevant variables for the anonymization process according to the criteria of the user interested in the treatment. Through this module, the user establishes relevant criteria in data processing from a business point of view. In this context, the owner of the data to be anonymized is called the client here. It has been adapted, for example, to the standard language and standard format of a normalized or unified data model. The configuration module (11) allows the following information (111) to be configured using parameters or variables:

    • Data set to be anonymized through an automatic reading (101) of the entities belonging to the normalized data model used as a reference.
    • Dataset output.
    • Transformation variables and Utility of information.

- Processing Module (12): This component has been designed to apply (121) the appropriate anonymization methodologies to detect and mitigate the singularity of the data according to the configuration registered in the previous component or configuration module (11). In this processing module (12) the following subprocesses are executed:
- Identification of unique records.
- Determination of the causes of the singularity.
- Selective and intelligent anonymization of categorical and continuous variables.
- Risk analysis module (13): This component executes the following subprocesses (131):

    • Comparison of Input and Output of Information Utility
    • Risk assessment

In the risk analysis module (13), metrics are established to evaluate or determine the risk of re-identification of the data owner or client and the utility of the information after its anonymization. It is responsible for analyzing the utility of the protected information in contrast to the risk of re-identification, understanding this as the probability that the client will be re-identified. It must be considered that a data set is exportable/publishable as long as the utility of the output of the data set has a value acceptable to the user and the risk of re-identification is below the maximum allowed by the legal area. It has been innovated so that the metric for both risk and utility is a value between 0 and 1.

Once the risk of re-identification and utility have been calculated in the risk analysis module (13), if after anonymizing the data by the processing module (12), it is found that the calculated utility or risk of re-identification is below of the expected values, the user must modify (103) the configuration parameters initially provided in the configuration module (11).

The solution presented with these main components is prepared to receive one or more sets of data in the data reading (101) from the configuration module (11) and apply obfuscation on them simultaneously. It is important to consider that the solution delivers at the output files with the information already anonymized, for data export (102), and delivers at that output as many files as it has received at the input.

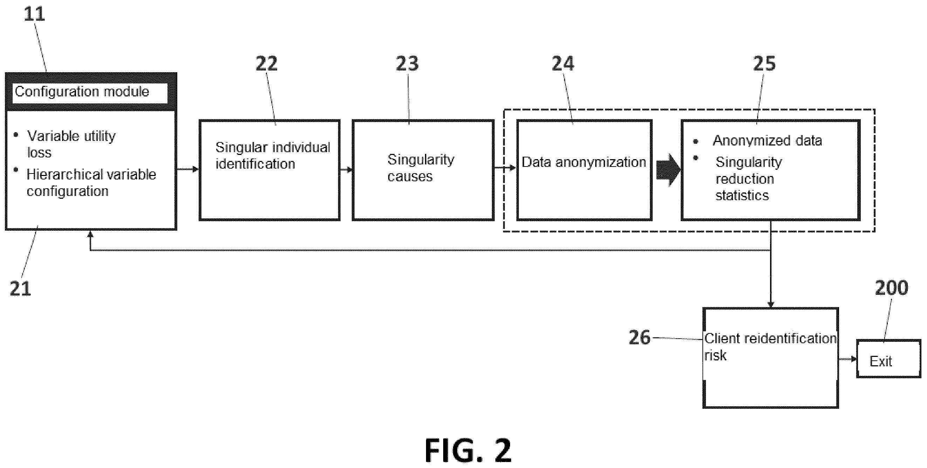

Data anonymization is the central process of the solution and includes a set of steps that are applied sequentially, responding to the flow shown in Figure 2. The set of steps to use to comply with data anonymization is following:

- Detection of singularities (22) by means of an autoencoder neural network. To do this, the configuration of the allowed value of loss of utility of the information and the configuration of the hierarchical variables provided by the configuration module (11) are used (21).
- Explanation of the causes of the singularity (23) using the well-known SHAP method.
- Anonymization algorithm (24) that applies:

    ◦ Heuristics of algorithm known as "SHAP Kernel" to calculate SHAP values and sort the errors of each abnormal client.

○ Anonymization of categorical variables, leveling up a hierarchical variable and random data mixing ("shuffling").
○ Anonymization of continuous variables. Smart Noise application.

As a result of applying the anonymization algorithm (24), anonymized data and singularity reduction statistics are obtained (25).
- Calculation of the utility of the information and the risk of client re-identification (26).

The different obfuscation methods contained in the different modules are detailed below:

- autoencoder type neural network for the detection of singularities:
  The autoencoder type network is a good option to detect anomalies in a data set. What this type of network does is remove noise from the elements of the data set. To do this, it first reduces the dimensionality of the input data and compresses the data into an encoded representation given by an encoder stage. After encoding the information, the model learns to decode, to ensure that the decoded information is as similar as possible to the previously encoded data. Finally, the reconstruction error is calculated. The reconstruction error measures how well the decoder is performing and how similar the output data set is to the original data set. Model training is about reducing this error. In one example, the architecture of the autoencoder network used is a feed forward neural network.

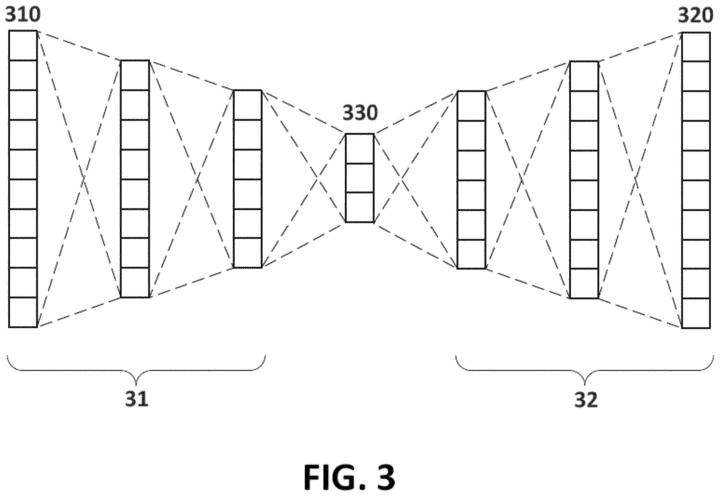

Figure 3 shows a schematic of the architecture of the autoencoder network, which is a neural network that learns to copy its input to its output. It has an internal or hidden layer that describes a code (330) used to represent the input (310), and is made up of two main parts: an encoder (31) that maps the input (310) to the code (330) and a decoder (32) that maps the code (330) to a reconstruction of the input to deliver to the output (320). Figure 3 shows that the dimensionality of the input data set (310) to the encoder (31) is the same as that of the output data set (320) of the decoder (32). Calculating the total information utility loss indicates how accurate the network's prediction is about each customer/client.

To consider whether a customer is singular or not, the autoencoder network calculates at its output a total reconstruction error as the difference between the original customer data and the reconstructed customer data. The theory is that the more unique a client is, the more difficult it is for the network to faithfully reconstruct it, so it is established that the greater the reconstruction error, the higher the level of singularity.

The processing module (12) that applies the anonymization algorithm (24) uses the reconstruction error as input to detect singularities (22) in a data set. In an exemplary embodiment, the following singularity detection methods (22) are used for the identification of unique individuals or clients:

- Anomaly Detection Using Range interquartile or IQR: The idea behind this method is to define a range for the available data, whereby all values that fall within that range are not considered outliers, but values outside that range are considered outliers. To define a singularity level of the reconstruction error obtained for each client, a first iterative threshold ($thr_{iqr}$) is established. This means that the threshold varies in each iteration, depending on the reconstruction errors of the applicable clients. Once the threshold $thr_{iqr}$ is obtained, the level of singularity of the clients is defined based on this value. The client is singular if the reconstruction error is above the first threshold $thr_{iqr}$ (singularity degree equal to one) and is non-singular if it is below the first threshold (singularity degree equal to zero).

- Anomaly detection using the Max Bin method: This method allows defining a complementary threshold to the IQR, since it considers the distribution of the variables rather than their content. This second threshold increases the error of those clients whose combination of categorical variables is unique and decreases the error of those clients whose combination of variables is common. To calculate this threshold, a concept is introduced that in machine learning. It is known as weight per row ("sample weight"), which allows the calculation of the distribution of clients according to their combination of variables.

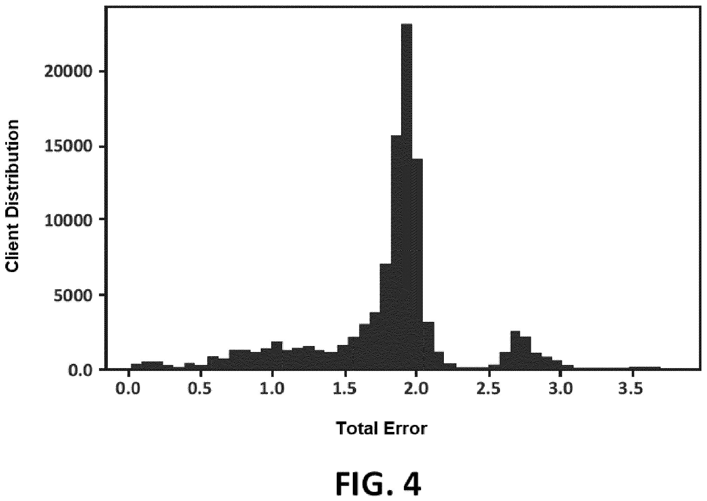

It can be seen in Figure 4, which shows the distribution of the total reconstruction error of the clients at the output of the autoencoder network, a container, in the shape of a rectangle, much higher than the others. These containers represent clients that have a very similar rebuild error. The median error represents unique customers well, as they make up the majority of errors in the longest bin or Max BIN. This median represents the second threshold; clients whose reconstruction error is greater than or equal to that second threshold are considered unique second-degree clients. In this way, two degrees of singularity are established: (i) first-degree singularities are the most restrictive and contain the clients considered singular by the first threshold given by the IQR interquartile range and (ii) second-degree singularities are those considered singular by the distribution of variables rather than by their content according to the max BIN method. Clients with zero singularity degree are not singular.

The SHAP method used to explain singularities (23) is an objective method to evaluate which variables have the most influence in making clients unique. Among the different SHAP methods available, we have chosen to use the Kernel SHAP algorithm, which is a regressive model, with which a SHAP value indicative of the cause of the singularity is obtained in terms of how much each input variable affects the prediction of whether a client is singular or not. To quantify it, the total error obtained is decomposed into several sub-errors. These errors represent the error for each of those clients per variable and the weight per row ("sample weight") is also taken into account, defined as the distribution of the combination of categorical variables for each client.

To calculate SHAP values per client, a random sample is taken from the total set of clients. For each of the customers in this sample, their total error is calculated using the trained model. Once the total errors of the clients in the sample have been obtained, their average error is obtained. For each individual client that you want to analyze, the error obtained is compared with the average total error of the clients in the sample.

Tests have been carried out with both categorical variables and continuous variables.

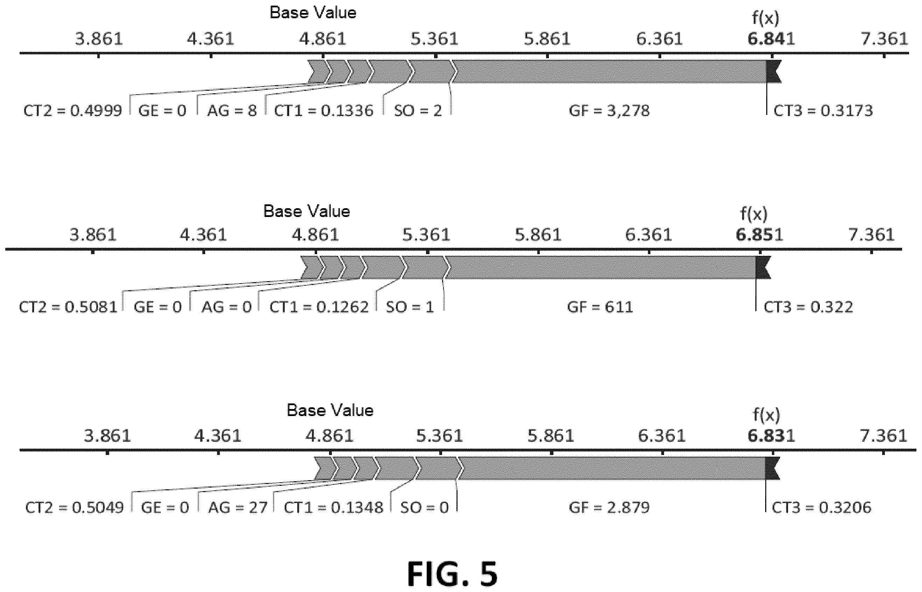

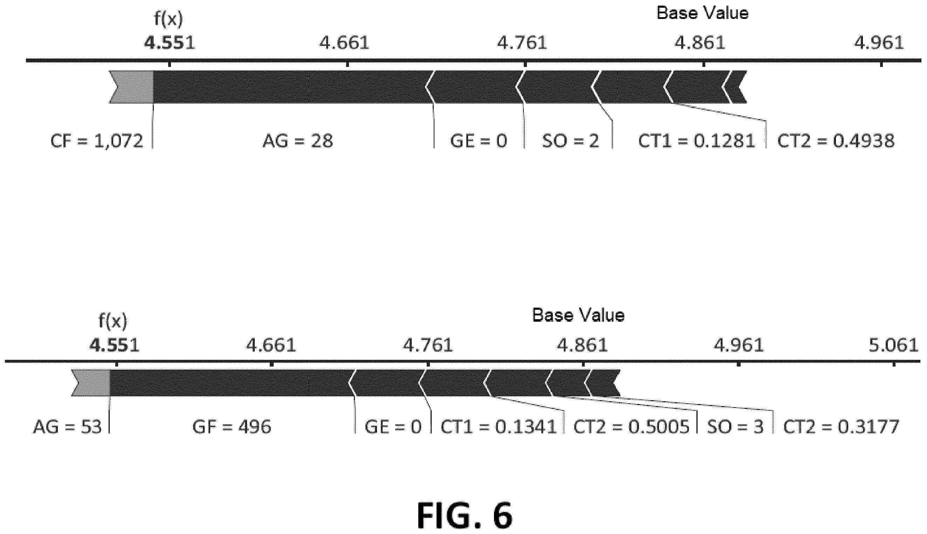

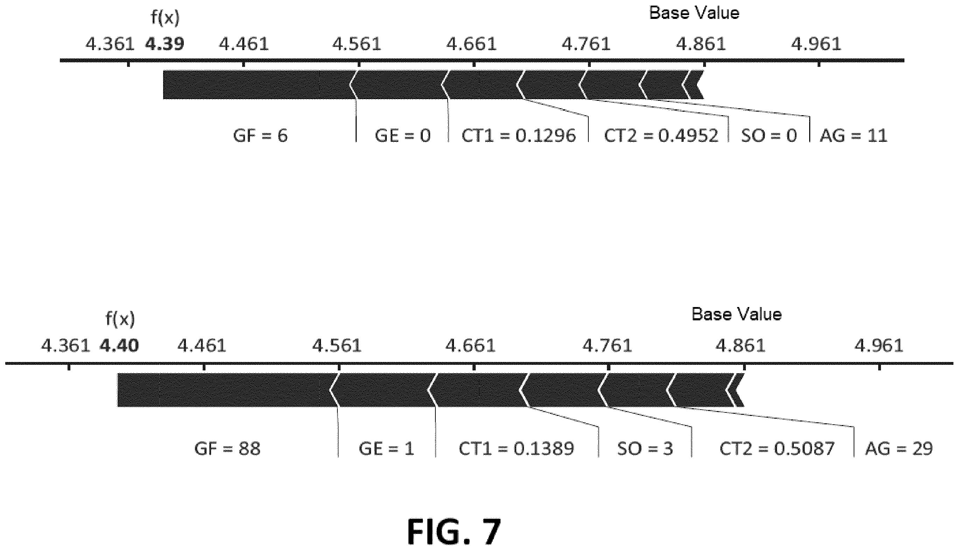

Figure 5 shows which variables most affect their total error in singular first-degree clients applying the SHAP Kernel algorithm. Particularly, Figure 5 shows Kernel SHAP values for three clients with first degree singularity level. This is an objective way to see which variables affect each client the most and make them stand out from the expected error. It should be noted that the SHAP values represented in Figure 5 in gray increase the total error, and the values in black decrease it, knowing that the higher the level of client error, the higher the level of singularity. Figure 6 shows values of the SHAP Kernel for two clients with a singularity level of second degree and Figure 7 for two clients with a singularity level of degree zero, with which you can see how the variables affect both singularities of degree two and to non-singular respectively.

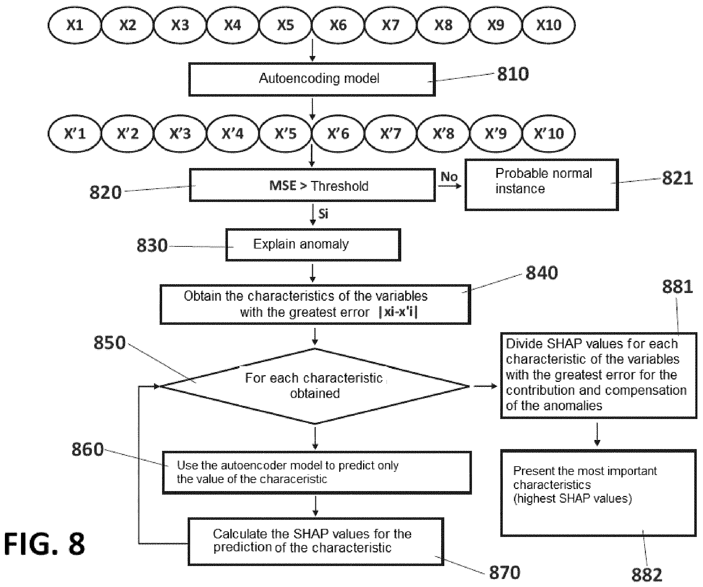

Figure 8 shows the applied Kernel SHAP algorithm, to sort the errors of each abnormal client. For each unique client detected, it was analyzed which variables contribute most to the total error of that client, ordered from highest to lowest. To do this, the values obtained through the SHAP Kernel are used, except that, instead of analyzing the total error, the error for each variable is analyzed. The advantage of this algorithm is that, instead of considering all the variables when calculating the SHAP values of each client, only the variables that contribute the most to that error are considered, the first being the ones that contribute the most, and the last the least. The variables given by the algorithm will be used to anonymize those clients that have been considered unique by the network. According to the flow chart of the Kernel SHAP algorithm shown in Figure 8, the autoencoder model (810) of the neural network transforms an instance of input variables $(x1, x2,..., x10)$ into an instance of output variables $(x'1, x'2,..., x'10)$, which is the instance for which you want an explanation and on which the mean squared errors or MSE are calculated. Said MSE is compared (820) with a threshold to determine that there are anomalies, if the threshold is exceeded, or it is likely to be a normal instance (821) if the threshold is not exceeded and, therefore, it is not considered an anomaly. In the case of anomalies, the Kernel SHAP algorithm delivers the parameters and model that explain the anomaly (830) and, with this, obtains (840) the characteristics of the variables with the greatest error, defined as Ixi-x'il. For each characteristic obtained (850), the autoencoder model is used to predict (860) only the value of the characteristic and then the SHAP values are calculated (870) for the prediction of the characteristic. The SHAP values for each characteristic of the variables with the largest error are divided (881) for the contribution and compensation of the anomalies. For each feature with the highest error, the most important features are presented (882), that is, those that obtain the highest SHAP values.

For the anonymization of categorical variables, two types of subvariables are distinguished: hierarchical categorical variables and non-hierarchical categorical variables. For practical purposes, non-hierarchical categorical variables are considered first-level hierarchical categorical variables, so the general algorithm for hierarchical categorical variables is described here. An example of hierarchical variables are geographical variables (for example, in Spain: locality, province and autonomous community). When anonymizing hierarchical categorical variables, several levels of singularity can be defined for each of the levels of the categorical variable present during the training of the autoencoder network. The module takes these different levels of thresholds into account, since a customer can be unique, for example, by location, anonymize their location, but still be unique by province. In that case, their province is anonymized and so on until the client is no longer singular. Once the singularity thresholds have been introduced by level of the hierarchical categorical variable, the two singularity methods that can be applied in cases where a record is no longer unique will be introduced. These two methods are leveling up and shuffling, which are described below.

- 　Method for leveling up hierarchical categorical variables:
  This method, as its name indicates, is given a value of a hierarchical categorical variable at level N (level 0 being the root node, level 1 the next level...), replacing the value of that variable with the equivalent variable of its parent node, or in other words, the value of the node at level N-1. Suppose we want to anonymize the value "Azuaga", which is a town in the province of Badajoz, in the autonomous community of Extremadura. To do this, simply "uplevel" is to eliminate the information related to the location of that record, and then you only know that this record comes from the province of Badajoz. That is, that record has been upgraded, losing some information about where the record came from, but the information is still truthful in the sense that no false information has been entered into the record. This technique can be applied as many times as you want to give less information about a record. The advantage of the level up method is its simplicity, that it does not add false information to the data (only information is removed) and also that with this data set it gives an anonymization percentage of 100%.

- "Shuffling" method for hierarchical categorical variables:

The shuffling method for categorical variables consists of reordering values between the records that you want to anonymize. That is, instead of eliminating part of the information as is done in the level up method, the available information is reordered in such a way that the records that were previously singular now cease to be singular. In order to minimize the introduction of noise into the data, shuffling is applied respecting the hierarchy of the categorical variable. That is, if you want to anonymize at the locality level for a client in the province of Madrid, the new value of the client's locality can only be from another locality belonging to the province of Madrid. For example, you can exchange a client from Getafe for another from Leganés, but in this first step you cannot exchange the client from Getafe for one from Sabadell. In the event that there continue to be unique clients in their location in Madrid and shuffling cannot be done, shuffling will be allowed between locations in the community, and in the event that it is not possible between locations in the country, in this case Spain. Finally, in the event that there are still localities that could not be applied shuffling, then shuffling is applied with the only restriction that they are from the same country, in this case Spain. In this way, the loss of information is minimized, in the sense that the records from Madrid remain mostly from Madrid, etc. In this shuffling method, the distribution by variable has not undergone any type of change, since it involves exchanging existing values and, in addition, by applying restrictions by province and community, we try to achieve the least possible loss of information, with the idea of that since noise is being applied, unless it is consistent with the higher levels.

For the anonymization of continuous variables, the method used consists of adding a type of noise that maintains the distribution of the data. The first step of this method is to establish what type of continuous distribution is most similar to that of the continuous variable to be anonymized. To do this, the distribution of the continuous variable is compared with the most common types of continuous distribution (normal, beta, gamma, weibull, lognorm...) and the one that has the highest level of similarity with this distribution is selected, calculating the sum of the squared errors or SSE ("Sum of Squared Errors") and the mean of squared errors or MSE ("Mean of Squared Errors"). For this, for example, the distfit library is used, which performs this action efficiently.

To measure the loss of utility or information that occurs when anonymizing a record, a distinction is made between continuous and categorical data, since this loss of utility is quantified differently depending on the type of data.

- Utility Loss for continuous values: Global utility loss (per variable) and local utility loss (per record) can be distinguished.

The Global Loss of Utility is included in the aforementioned reference "Probabilistic Loss Information Measures in Confidentiality Protection of Continuous Microdata" (by JM Mateo-Sanz et al., Data Mining and Knowledge Discovery, 2005), where a loss of utility is recorded in percentage between zero and one hundred, with zero not suffering any loss of information and one hundred suffering a complete loss of information. As a summary, this well-known method combines five different metrics, which are the following:

- Variation of the mean before and after anonymizing
- Variance change before and after anonymizing
- Covariance variation before and after anonymizing
- Variation of Pearson correlation before and after anonymizing
- Variation of quartiles before and after anonymizing

This probabilistic method guarantees that each of these metrics is included in the interval [0, 1]. The final utility loss metric between the continuous data set before and after anonymizing is the weighted average of these five metrics. This guarantees that the total utility loss is between 0 and 1, and represents in a friendly way how the set of continuous variables is varying before and after anonymizing.

On the other hand, Local Utility Loss (per record) addresses how much utility loss there is per customer. The metric chosen for this is the percentage of percentile variation that each of the anonymized data has suffered. For example, if the data before anonymizing is worth 101.3 and is in the 0.99 percentile, and after anonymizing we have the value 23.2 and is in the 0.97 percentile, the difference between percentiles will be 0.99 - 0.97 = 0.02. If the local loss is combined with the global loss, using the following formula, given a data set D and another anonymized data set D', the utility loss of the continuous values is as follows:

$$Perdida_{Cont}(D, D') = 0.5 X Prob_{Loss}(D, D') + 0.5 X Percentil_{Diff}(D, D')$$

- Loss of Utility for categorical variables:

Regarding the loss of local utility (per record) for categorical values, the concept of Normalized Certainty Penalty (NCP) has been used. This metric is quite simple but widely used and is based on hierarchical categorical data, but is also applicable for non-hierarchical categorical data. The normalized certainty penalty, NCP, is defined as follows:

Given a tuple t that represents a value v of the categorical value A (v, A), and u is the parent node of the value v, the normalized certainty penalty NCP is defined as:

$$NCP(v, A) = \frac{|u|}{|A|}, |A| \ numero \ de \ valores \ distintos \ de \ A$$

Regarding the global utility loss (per variable), the NCP quantifies the loss per record, however, another metric is necessary to define the global loss. This metric is the Jensen Shannon divergence, which is a defined distance function between probabilistic distributions, such as in this case the distributions of categorical variables. The Jensen Shannon divergence is derived from the well-known Shannon entropy and this metric is always contained between 0 and 1. This is particularly interesting in this problem where there are weights involved (continuous vs. categorical, local utility loss vs. global utility loss). This allows this distance to be used in harmony with the NCP metric, which is also defined between 0 and 1.

$$JSD(P \parallel Q) = \frac{1}{2}D(P \parallel M) + \frac{1}{2}D(Q \parallel M) \quad M = \frac{1}{2}(P + Q)$$

The formula above collects the formula for the Jensen-Shannon entropy, over a metric space M defined from 0 to infinity. And two probability functions, P and Q. Thus, once the utility loss metrics for categorical variables have been defined, both continuous and global, the utility loss formula for categorical variables is as follows. Given an anonymized data set D', the utility loss for categorical variables is:

$$Perdida_{Cat}(D, D') = 0.5xNCP(D, D') + 0.5xJensen \ Shannon(D, D')$$

The calculation of the risk of re-identification (26) is given by the total error of the autoencoder, which returns one error per record. This error simply has to be normalized between 0 and 1, so that the scale is the same as the loss of utility. The idea is that the greater the loss of utility there is, the less susceptible the records to be re-identified. By definition, clients who are below the second singularity threshold $thr_{MaxBin}$ are considered to have no risk of re-identification since the anonymization module only considers as singular and therefore re-identifiable those clients with a total error greater than or just like that second threshold $thr_{MaxBin}$. That is, for the calculation of the risk of re-identification, as well as for the calculation of the loss of utility, only individual clients are taken into account. To define the risk of re-identification of unique clients, the distance to the second normalized threshold $thr_{MaxBin}$ is added, that is, given:

$$riesgo_{reiden}(err) = normalizacion_{min-max}(err - thr_{MaxBin})$$

$$si \ dist_{thr} = err - thr_{MaxBin},$$

$$riesgo_{reiden} = (dist_{thr} - \min(dist_{thr}))/(\max(dist_{thr}) - \min(dist_{thr}))$$

where the risk of re-identification is defined between 0 and 1, by min-max normalization. Therefore, the risk of re-identification of all singulars is the average of this value. When the data set is anonymized, the risk of re-identification is reduced and the loss of utility increases. Finally, the formula that combines the risk of re-identification and the loss of utility is defined as:

$$UtilReident(D, D') = (Utilidad\ (D, D') + Reidentificacion\ (D, D'))/2$$

**Claims**

1. A computer-implemented method for data anonymization **characterized by** the following steps:

   - reading data (101) from a set of input data, from a configuration module (11), the input data being property of a client, to be anonymized, and establishing by a user, through the configuration module (11), information transformation variables, which are selected from continuous variables and hierarchical variables, a utility variable of the information before anonymization and configuration variables for data export (102), of an output data set, the output data being anonymized;
   - obtaining (25), by a processing module (12), the anonymized data of the output data set by applying (121) an anonymization algorithm (24) and obtain statistical variables to reduce singularities detected in the anonymization, wherein the anonymization algorithm (24) performs anonymization of both the categorical variables and the continuous variables and wherein obtaining the statistical variables to reduce singularities comprises that the processing module (12) detects the singularities (22) through an autoencoder neural network and obtains causes of singularity (23) using the SHAP method;
   - calculating a client identification risk metric (26) and a utility variable of the information after anonymizing, using a risk analysis module (13), where the risk analysis module (13) calculates a value of utility loss by comparing the utility variable of the input information and the utility variable of the output information, the utility loss value being in a range between zero and one, and wherein the risk analysis module (13) calculates the risk metric with a risk value in the range between zero and one, where the utility loss value and the risk value determine whether the output data set is exportable.

2. The method according to claim 1, **characterized in that** the steps carried out by the processing module (12) are executed according to the following sequence:

   i) detecting the singularities (22), using (21) the configuration of loss of utility of the information and the hierarchical variables provided by the configuration module (11), and calculating a reconstruction error of the information;
   ii) obtaining the causes of the singularity (23) for each detected singularity;
   iii) applying (121) the anonymization algorithm (24) using the causes of singularity (23) to calculate SHAP values using the Kernel SHAP algorithm and sort each singularity by a singularity level associated with the calculated reconstruction error;
   iv) anonymizing categorical variables;
   v) anonymizing continuous variables.

3. The method according to claim 2, **characterized in that** detecting the singularities (22) comprises using the interquartile range method to define a first iterative threshold and associate a first level of singularity to the reconstruction error equal to or above the first threshold and a zero singularity level, which indicates that no singularity is detected, when the reconstruction error is below the first threshold.

4. The method according to claim 3, **characterized in that** detecting the singularities (22) further comprises using the Max Bin method to define a second threshold lower than the first threshold and associating a second level of singularity to the reconstruction error equal to or that is above the second threshold.

5. The method according to claim 2, **characterized in that** anonymizing the categorical variables comprises raising the singularity level of a hierarchical variable and randomly mixing the data, and anonymizing the continuous variables comprises applying noise to the data that maintains the distribution of the data.

6. The method according to claim 2, **characterized in that** anonymizing the continuous variables comprises determining a type of continuous distribution with a higher level of similarity to a distribution of the continuous variable to be anonymized, comparing the distribution of the continuous variable with each type of continuous distribution and calculating the sum of the squared errors or the mean of the squared errors to obtain the level of similarity between compared distributions, and adding a type of noise that maintains the determined continuous distribution with a higher level of similarity.

**7.** The method according to claim 2, **characterized in that** anonymizing the hierarchical categorical variables comprises defining a plurality of singularity levels for each level of categorical variable present in the training of the autoencoder network.

**8.** The method according to any of the preceding claims, **characterized in that** calculating the value of utility loss, for continuous variables, comprises obtaining the following statistical metrics:

> variation of the mean before and after anonymizing,
> variance variation before and after anonymizing,
> covariance variation before and after anonymizing,
> variation of Pearson correlation before and after anonymizing,
> variation of quartiles before and after anonymizing;

and the utility loss value is the weighted average of the five metrics per variable, which is between 0 and 1.

**9.** The method according to any of the previous claims, **characterized in that** calculating the value of utility loss, for continuous variables, comprises calculating a percentage of percentile variation that each of the anonymized data suffers and which is the value of utility loss per record.

**10.** The method according to any of the preceding claims, **characterized in that** calculating the utility loss value, for hierarchical variables, comprises calculating a normalized certainty penalty to obtain the utility loss value per record, and calculating a Jensen divergence Shannon to obtain the utility loss value per variable.

**11.** A system for data anonymization, **characterized in that** it comprises:

> - a configuration module (11) from which a user reads data (101) from a set of input data, the input data being property of a client to be anonymized and establishes information transformation variables, which are selected from continuous variables and hierarchical variables, a utility variable of the information before anonymization and configuration variables for a data export (102), of an output data set, the output data being anonymized;
> - a processing module (12) configured to obtain (25) the anonymized data from the output data set by applying (121) an anonymization algorithm (24) and obtain statistical variables to reduce singularities detected in the anonymization, wherein the anonymization algorithm (24) performs anonymization of both the categorical variables and the continuous variables and wherein obtaining the statistical variables to reduce singularities comprises that the processing module (12) detects the singularities (22) through an autoencoder neural network and obtains causes of singularity (23) using the SHAP method;
> - a risk analysis module (13) configured to calculate a client identification risk metric (26) and an information utility variable after anonymizing, wherein the risk analysis module (13) calculates a value of utility loss by comparing the utility variable of the input information and the utility variable of the output information, the utility loss value being in a range between zero and one, and where the risk analysis module (13) calculates the risk metric with a risk value in the range between zero and one, where the utility loss value and the risk value determine whether the output data set is exportable.

**12.** The system according to the previous claim, **characterized in that** the autoencoder network used is a feed forward neural network.

**13.** A computer program that implements the method defined according to claims 1-10.

**FIG. 1**

**FIG. 2**

**FIG. 3**

**FIG. 4**

Base Value | f(x)

| 3.861 | 4.361 | 4.861 | 5.361 | 5.861 | 6.361 | **6.84**1 | 7.361 |

CT2 = 0.4999 | GE = 0 | AG = 8 | CT1 = 0.1336 | SO = 2 | GF = 3,278 | CT3 = 0.3173

Base Value | f(x)

| 3.861 | 4.361 | 4.861 | 5.361 | 5.861 | 6.361 | **6.85**1 | 7.361 |

CT2 = 0.5081 | GE = 0 | AG = 0 | CT1 = 0.1262 | SO = 1 | GF = 611 | CT3 = 0.322

Base Value | f(x)

| 3.861 | 4.361 | 4.861 | 5.361 | 5.861 | 6.361 | **6.83**1 | 7.361 |

CT2 = 0.5049 | GE = 0 | AG = 27 | CT1 = 0.1348 | SO = 0 | GF = 2.879 | CT3 = 0.3206

# FIG. 5

f(x)

Base Value

**4.55**1       4.661       4.761       4.861       4.961

CF = 1,072       AG = 28       GE = 0 | SO = 2 | CT1 = 0.1281 | CT2 = 0.4938

f(x)

Base Value

**4.55**1       4.661       4.761       4.861       4.961       5.061

AG = 53       GF = 496       GE = 0 | CT1 = 0.1341 | CT2 = 0.5005 | SO = 3 | CT2 = 0.3177

# FIG. 6

EP 4 372 593 A1

f(x)                                          Base Value

4.361  **4.39**   4.461      4.561      4.661      4.761      4.861      4.961

GF = 6        GE = 0    CT1 = 0.1296    CT2 = 0.4952   SO = 0   AG = 11

f(x)                                          Base Value

4.361  **4.40**   4.461      4.561      4.661      4.761      4.861      4.961

GF = 88       GE = 1    CT1 = 0.1389    SO = 3    CT2 = 0.5087   AG = 29

# FIG. 7

FIG. 8

**EP 4 372 593 A1**

# INTERNATIONAL SEARCH REPORT

| | International application No. |
|---|---|
| | PCT/ES2021/070529 |

**A. CLASSIFICATION OF SUBJECT MATTER**

*G06F21/62* (2013.01)
*G06N3/02* (2006.01)
According to International Patent Classification (IPC) or to both national classification and IPC

**B. FIELDS SEARCHED**

Minimum documentation searched (classification system followed by classification symbols)
G06F, G06N

Documentation searched other than minimum documentation to the extent that such documents are included in the fields searched

Electronic data base consulted during the international search (name of data base and, where practicable, search terms used)

EPODOC, INVENES, WPI

**C. DOCUMENTS CONSIDERED TO BE RELEVANT**

| Category* | Citation of document, with indication, where appropriate, of the relevant passages | Relevant to claim No. |
|---|---|---|
| X | EP 3591561 A1 (SYNERGIC PARTNERS S L U) 08/01/2020, Paragraphs [3 - 11]; paragraph [14]; paragraph [17]; Paragraphs [21 - 26]; paragraph [40]; paragraph [43]; claim 1, figure 1, figure 2, figure 4, | 1-12 |
| L | TAKEISHI N et al.. On anomaly interpretation via shapley values [arXiv]. Arxiv 9 April 2020 Arxiv Usa., 09/04/2020, pages 23 pp. [on line][retrieved on 24/03/2022]. Retrieved of <URL: https://arxiv.org/abs/2004.04464 > Section 3 | 1, 3, 7, 11 |

☒ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 30/03/2022 | **(04/04/2022)** |
| Name and mailing address of the ISA/ | Authorized officer |
| | J. Vazquez Burgos |
| OFICINA ESPAÑOLA DE PATENTES Y MARCAS Paseo de la Castellana, 75 - 28071 Madrid (España) Facsimile No.: 91 349 53 04 | Telephone No. 91 3495513 |

Form PCT/ISA/210 (second sheet) (January 2015)

## INTERNATIONAL SEARCH REPORT

| International application No. |
|---|
| PCT/ES2021/070529 |

| C (continuation). | DOCUMENTS CONSIDERED TO BE RELEVANT | |
|---|---|---|
| Category * | Citation of documents, with indication, where appropriate, of the relevant passages | Relevant to claim No. |
| L | ANCO HUNDEPOOL et al.. Handbook on Statistical Disclosure Control Version 1.01. 20070301 C E N E X S D C A Centre of Excellence for Statistical Disclosure Control., 01/03/2007, pages 0 [on line][retrieved on 24/03/2022]. Retrieved of <URL: https://ec.europa.eu/eurostat/cros/content/handbook-sdc_en > Sections 1.3, 1.4, 3, 3.2, 3.2.5, 3.3.1, 3.3.7.2, 3.4.3.2, 4.3.1 | 1, 6, 11 |
| L | SIMSON L. GARFINKEL. Of-identiying government datasets (2nd draft). NIST Special publication 800-188. Nist, 15/12/2016 [on line][retrieved the 24/03/2022]. Retrieved from <URL: https://csrc.nist.gov/publications/detail/sp/800-188/draft > Section 7.7.1 | 1, 11 |
| L | PRASSER FABIAN et al.. ARX--A Comprehensive Tool for Anonymizing Biomedical Data.. Amia ... Annual Symposium Proceedings. Amia Symposium United States 2014., 30/11/2013, Vol. 2014 [on line][retrieved on 24/03/2022]. Retrieved of <URL: https://www.ncbi.nlm.nih.gov/pmc/articles/PMC4419984/ >, ISSN 1942-597X (Electronic), <DOI: pubmed:25954407> pages 986 - 989; | 1-2, 11 |
| L | ANTWARG L et al.. Explaining Anomalies Detected by Autoencoders Using SHAP [arXiv]. Arxiv 6 March 2019 Arxiv Usa., 06/03/2019, Pages 5 pp. [on line][retrieved on 24/03/2022]. Retrieved from <URL: https://arxiv.org/abs/1903.02407 > Sections 7.1.1, 7.4.1 | 3-4 |
| L | EUROPEAN PARLIAMENT. ARTICLE 29 DATA PROTECTION WORKING PARTY 0829/14/EN WP216 Opinion 05/2014 on Anonymisation Techniques. 20140410., 10/04/2014 [on line][retrieved on 24/03/2022]. Retrieved of <URL: https://ec.europa.eu/justice/article-29/documentation/opinion-recommendation/files/2014/wp216_en.pdf > Sections 3.1.1, 3.1.2, 3.2 | 5 |
| L | Least squares. Wikipedia, 01/07/2021 [on line][retrieved the 24/03/2022]. Retrieved from <URL: https://in.wikipedia.org/w/index.php?title=Least_squares&oldid=1031404203 > the whole document | 6 |
| L | DOMINGO-FERRER J., SÁNCHEZ D., HAJIAN S. Database Privacy. In: Zeadally S., Badra M. (eds) . Privacy In A Digital, Networked World. Zeadally S., Badra M. (eds). Springer, 14/09/2015 ISSN 978-3-319-08469-5 pages 13 - 14; | 8 |

Form PCT/ISA/210 (continuation of second sheet) (January 2015)

## INTERNATIONAL SEARCH REPORT

| | International application No. |
|---|---|
| | PCT/ES2021/070529 |

| C (continuation). | DOCUMENTS CONSIDERED TO BE RELEVANT | |
|---|---|---|
| Category * | Citation of documents, with indication, where appropriate, of the relevant passages | Relevant to claim No. |
| L | JOSEP M. MATEO-SANZ. Probabilistic Information Loss Measures in Confidentiality Protection of Continuous Microdata. Springer, 02/09/2005 [on line][retrieved on 24/03/2022]. Retrieved of <URL: https://link.springer.com/article/10.1007/s10618-005-0011-9 >, <DOI: 10.1007/s10618-005-0011-9> pages 188 - 190; | 8 |
| L | Autoencoder. Wikipedia, 12/07/2021 [on line][retrieved the 24/03/2022]. Retrieved from <URL: https://in.wikipedia.org/w/index.php?title=Autoencoder&oldid=1033189336 > the whole document | 12 |

Form PCT/ISA/210 (continuation of second sheet) (January 2015)

**INTERNATIONAL SEARCH REPORT**

Information on patent family members

| International application No. |
| --- |
| PCT/ES2021/070529 |

| Patent document cited in the search report | Publication date | Patent family member(s) | Publication date |
| --- | --- | --- | --- |
| EP3591561 A1 | 08.01.2020 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. ANTWARG et al.** *Explaining Anomalies Detected by Autoencoders Using SHAP,* 2020
- **A. HEYDARI et al.** *SoftAdapt: Techniques for Adaptive Loss Weighting of Neural Networks with Multi-Part Loss Functions,* 2020
- **JM MATEO-SANZ et al.** Probabilistic Loss Information Measures in Confidentiality Protection of Continuous Microdata. *Data Mining and Knowledge Discovery,* 2005